# EUROPÄISCHE PATENTSCHRIFT

(11) **EP 0 839 560 B1**
(45) Veröffentlichungstag und Bekanntmachung des Hinweises auf die Patenterteilung: **04.02.2004**
(21) Anmeldenummer: 97117918.9
(22) Anmeldetag: 16.10.1997
(51) Int. Cl.: B01D 5/00, B01D 8/00, B01D 53/00

(54) **Verfahren und Vorrichtung zur Reinigung von Gasen mit Wärmetauschern**
Method and apparatus for gas cleaning with heat exchangers
Procédé et dispositif d'épuration de gaz avec des échangeurs de chaleur

(30) Priorität: 05.11.1996 DE 19645487
(43) Veröffentlichungstag der Anmeldung: 06.05.1998
(73) Patentinhaber: Messer Griesheim GmbH, 65933 Frankfurt am Main (DE)
(72) Erfinder: Herzog, Friedhelm, Dr., 47799 Krefeld (DE); Terkatz, Stefan, 47807 Krefeld (DE); Schulte, Martin, 47799 Krefeld (DE)

(56) Entgegenhaltungen:
- EP-A- 0 275 472
- EP-A- 0 681 154
- EP-A- 0 742 040

## Beschreibung

Die Erfindung betrifft ein Verfahren zur Reinigung von Gasen durch Kondensieren und/oder Ausfrieren der Schadstoffe nach dem Oberbegriff des Anspruchs 1, sowie eine für die Durchführung des Verfahrens geeignete Vorrichtung.

Unter Reinigung von Gasen durch Kondensieren und/oder Ausfrieren der Schadstoffe ist hier allgemein die Reinigung von Abluft-, Abgas oder Prozeßgasströmen gemeint, die aus Dampf, dampfförmigen Stoffen oder Gasen bestehen können. Insbesondere sind darunter auch relativ hoch mit Lösemitteln beladene Abluftströme gemeint, die beispielsweise bei Prozessen in der Chemie oder als Abgase aus Tanklagem entstehen können. Unter dem Begriff "Schadstoffe" sind daher auch Lösemittel zu verstehen, die als Wertstoffe einer weiteren Verwendung zugeführt werden können.

Verunreinigungen können aus Gasen durch Kondensation oder Ausfrieren abgeschieden werden. Hierzu werden nach dem Stand der Technik Wärmetauscher eingesetzt, bei denen das zu reinigende Gas, im folgenden als "Rohgas" bezeichnet, durch Kontakt mit Wärmetauscherflächen, welche verschiedenartig ausgestaltet sein können, in Kontakt gebracht wird und welche gekühlt werden mit einem Kühlmedium, das im folgenden als "erstes Kühlmedium" bezeichnet wird.

Diese Wärmetauscher werden in der Regel über einen Zwischenkreislauf gekühlt. Die Wärmeabfuhr aus dem Zwischenkreislauf erfolgt über einen mit einem weiteren Kühlmedium betriebenen zweiten Wärmetauscher. Das weitere Kühlmedium wird hier zweites Kühlmedium" genannt. Zur Reduzierung des Bedarfs an dem zweiten Kühlmedium kann das kalte gereinigte Gas, welches im folgenden als "Reingas" bezeichnet wird, zur Vorkühlung des zu reinigenden Abgases verwendet werden. Die Vorkühlung erfolgt in einem vorgeschalteten oder in dem ersten Wärmetauscher integrierten Rekuperator. Da sich in dem vom Rohgas durchströmten Apparaten Eis bilden kann, müssen diese von Zeit zu Zeit abgetaut werden. Das Abtauen erfolgt durch Unterbrechung der Zufuhr des zweiten Kühlmediums und Zuschalten einer Wärmequelle in den Zwischenkreislauf (H. Grabhom und H. Herzog "Kondensationsverfahren zur Lösemittelrückgewinnung und Abgasreinigung", WLB Wasser, Luft und Boden 06/1995). Auf diese Weise kann jedoch nur der zum Kondensieren bzw. Ausfrieren der Schadstoffe eingesetzte erste Wärmetauscher abgetaut werden. Der Rekuperator muß beispielsweise mit externen Wärmequellen beheizt werden, was insbesondere bei größeren Apparaten sehr problematisch ist.

Aus der EP 0 681 154 ist eine "Kaltwäsche" bekannt geworden , bei der aus dem zu reinigenden Gas zu entfernende Stoffe durch Beduschen mit einem Kälteträger kondensieren. Der Kälteträger wird dabei im Kreislauf geführt und durch ein zweites Kühlmedium in einem Wärmetauscher gekühlt. Ein weiterer Wärmetauscher sorgt für eine zusätzliche Kühlung des Kälteträgers mittels des gekühlten Reingases. Als Kälteträger kommt bei diesem Gegenstand das Eigenkondensat zum Einsatz, das im Anschluss an die Wärmerübertragung einer Reinigungsstufe zur Entwässerung und zur Entfernung nicht kondensierbarer Komponenten zugeführt wird. Nachteilig bei diesem bekannten Stand der Technik ist, dass der direkte Kontakt des Kondensats mit dem zu reinigende Gas dazu führt, dass sich die Zusammensetzung und damit die Kühlcharakteristik des Eigenkondensats im Laufe der Zeit verändert und laufend neu eingestellt werden muss. Zudem muss das Eigenkondensat im gesamten Kreislauf flüssig gehalten werden, da eine Verfestigung des Kondensats zur Vereisung der Leitungen führen würde. Hierdurch wird der Temperaturbereich, in dem dieser Gegenstand arbeiten kann, weiter eingeschränkt.

Der Erfindung liegt die Aufgabe zugrunde, die aus dem Stand der Technik bekannte Vorrichtung dahingehend zu verbessern, dass der Temperatur-Arbeitsbereich der Anlage erweitert wird und dass zudem auf eine aufwändige Reinigung des Kühlmittels verzichtet werden kann.

Erfindungsgemäß wird diese Aufgabe dadurch gelöst, dass die Übertragung von Wärme vom Rohgas auf das erste Kühlmedium an durch verschiedene Strömungswege an den gemeinsamen Wärmetauscherflächen des ersten Wärmetauschers erfolgt. Durch den Einsatz von Wärmetauscherflächen können die Stoffströme von zu reinigendem Gas und Kältemedium voneinander getrennt werden, wodurch auf eine Reinigungsstufe des ersten Kühlmittels verzichtet werden kann.

Es ist nach der Erfindung vorgesehen, daß das erste Kühlmedium vor dessen Zuführung in den ersten oder zweiten Wärmetauscher in mindestens einem dritten Wärmetauscher mit Hilfe des kalten Reingases gekühlt wird. So kann die Kälte des Reingases sicher an das erste Kühlmedium abgegeben werden.

Erfindungsgemäß wird das erste Kühlmedium vor dessen Zuführung in den , ersten oder zweiten Wärmetauscher zumindest zeitweise zusätzlich gekühlt mit Hilfe des zweiten Kühlmediums, das aus dem zweiten Wärmetauscher austritt. Dadurch wird die Ausnutzung des Kälteinhalts des zweiten Kühlmediums verbessert.

Nach der Erfindung ist es vorgesehen, daß das erste Kühlmedium vor dessen Zuführung in den ersten, zweiten oder dritten Wärmetauscher zumindest zeitweise zusätzlich gekühlt wird in einem vierten Wärmetauscher mit Hilfe des zweiten Kühlmediums, das aus dem zweiten Wärmetauscher austritt. So kann die Kälte des zweiten Kühlmediums sicher an das erste Kühlmedium abgegeben werden.

Nach der Erfindung ist das erste Kühlmedium gasförmiger Stickstoff und/oder das zweite Kühlmedium ist flüssiger Stickstoff. Ein besonderer Vorteil der Verwendung von Stickstoff ist einerseits der hohe Kälteinhalt von flüssigem Stickstoff und gasförmigem Stickstoff, sowie die relative hohe Betriebssicherheit und wirtschaftliche Verfahrensweise bei Stickstoff-gekühlten Wärmetauschem. Insbesondere die kombinierte Verwendung von flüssigem und gasförmigem Stickstoff als Kälteträger ist vorteilhaft, da dann nur eine einzige Quelle, beispielsweise ein Tank für flüssigen Stickstoff, für die Kälteträger nötig ist.

Erfindungsgemäß wird das erste Kühlmedium vor dessen Zuführung in den ersten, zweiten und/oder dritten Wärmetauscher zumindest zeitweise zusätzlich mit Hilfe von Kühlwasser, Kühlsole oder Kältemaschinen gekühlt. Insbesondere bei bereits vorhandenem Kühlwasser oder Kühlsole kann durch deren Verwendung die Wirtschaftlichkeit des Verfahren erhöht werden.

Es ist nach der Erfindung vorgesehen, daß das den zweiten Wärmetauscher verlassende zweite Kühlmedium einen fünften Wärmetauscher zugeführt wird, mit welchem das Rohgas vorgekühlt wird.

Ferner wird erfindungsgemäß der erste, zweite, dritte, vierte und/oder fünfte Wärmetauscher im Gegenstromverfahren betrieben. Durch diese Verfahrensweise läßt sich eine relativ hohe Ausnutzung des Kälteinhalts der Kälteträger erreichen.

Die Erfindung wird ferner durch eine Vorrichtung zur Reinigung von Gasen mit mindestens einem ersten Wärmetauscher, dem mindestens eine Eintrittsleitung für das Rohgas und mindestens eine Austrittsleitung für das kalte Reingas und mindestens eine Eintrittsleitung und mindestens eine Austrittsleitung für das erste Kühlmedium zugeordnet sind, mit mindestens einem zweiten Wärmetauscher, dem mindestens eine Eintrittsleitung und mindestens eine Austrittsleitung für das aus dem ersten Wärmetauscher kommende erste Kühlmedium und mindestens eine Eintrittsleitung und mindestens eine Austrittsleitung für ein zweites Kühlmedium zugeordnet sind, gelöst, wobei in der Leitung für das erste Kühlmedium mindestens ein dritter Wärmetauscher mit mindestens einer Eintrittsleitung und mindestens einer Austrittsleitung für das erste Kühlmedium angeordnet ist und dem dritten Wärmetauscher mindestens eine Eintrittsleitung und mindestens eine Austrittsleitung für das aus dem ersten Wärmetauscher kommende kalte Reingas zugeordnet sind.

Nach der Erfindung ist in der Leitung für das erste Kühlmedium mindestens ein vierter Wärmetauscher mit mindestens einer Eintrittsleitung und mindestens einer Austrittsleitung für das erste Kühlmedium angeordnet und dem vierten Wärmetauscher sind mindestens eine Eintrittsleitung und mindestens eine Austrittsleitung für das aus dem zweiten und/oder dritten Wärmetauscher kommende zweite Kühlmedium zugeordnet.

Nach der Erfindung ist es vorgesehen, daß der zweite, dritte und/oder vierte Wärmetauscher in einem einzigen Apparat integriert sind und der Wärmetausch durch verschiedene Strömungswege an den gemeinsamen Wärmetauschflächen realisiert wird.

Schließlich ist es nach der Erfindung vorgesehen, daß in der Leitung für das zu reinigende Gas mindestens ein fünfter Wärmetauscher mit mindestens einer Eintrittsleitung und mindestens einer Austrittsleitung für das Rohgas angeordnet ist und dem fünften Wärmetauscher mindestens eine Eintrittsleitung und mindestens eine Austrittsleitung für das aus dem zweiten, dritten und/oder vierten Wärmetauscher kommende zweite Kühlmedium zugeordnet sind.

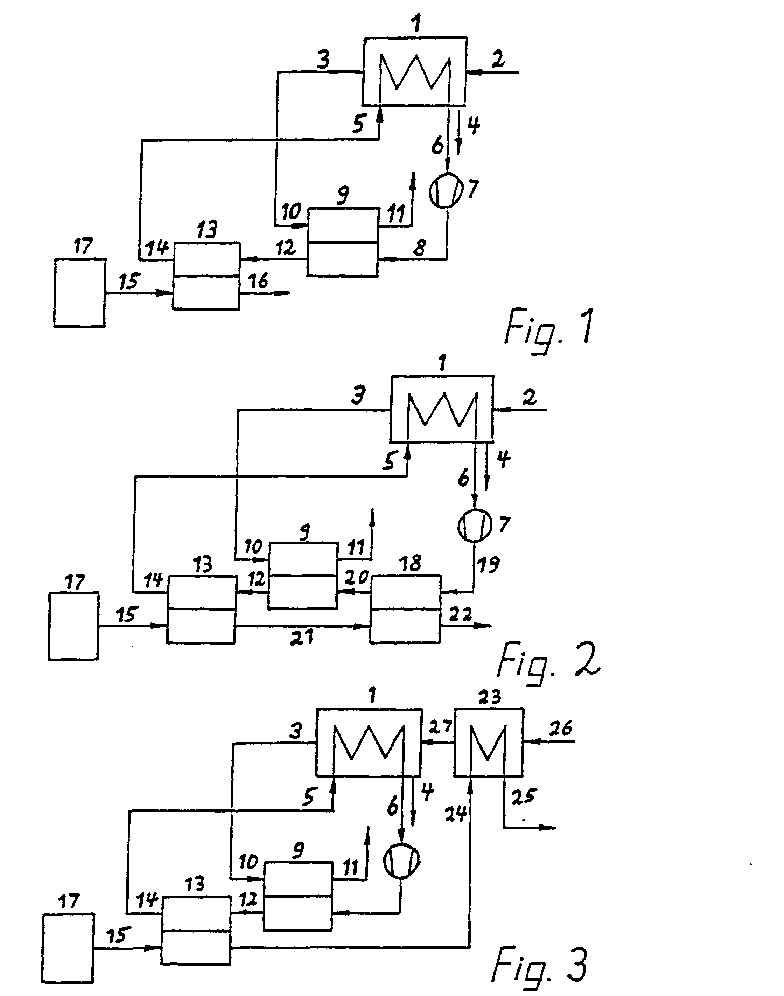

Das erfindungsgemäße Verfahren und die erfindungsgemäße Vorrichtung wird nun anhand von einem Ausführungsbeispiel mit Vergleichsbeispiel nach dem Stand der Technik und von drei Abbildungen (Fig. 1, Fig. 2 und Fig. 3) beispielhaft näher erläutert.

### Beispiel:

Ein erster Wärmetauscher mit einer Kälteleistung von 6 kW wurde mit einem Rohgasstrom von ca. 100 kg pro Stunde Luft mit einem Anteil an Lösungsmitteln von ca. 20 kg pro Stunde beaufschlagt. Das Rohgas hatte eine Temperatur von 20°C bei Eintritt in den Wärmetauscher. Im Wärmetauscher wurde das Lösungsmittel durch Kondensieren und/oder Ausfrieren aus dem Rohgasstrom abgetrennt. Der erste Wärmetauscher wurde durch ein in einem Zwischenkreislauf geführtes erstes Kühlmedium (gasförmiger Stickstoff) gekühlt, welches eine Temperatur von minus 160°C vor Eintritt in den ersten Wärmetauscher aufwies. Nach Verlassen des ersten Wärmetauschers betrug die Temperatur des ersten Kühlmediums minus 20°C. Die Menge des mit Hilfe eines Gebläses oder einer Pumpe im Kreislauf geführten ersten Kühlmediums betrug 155 kg pro Stunde. In einem dritten Wärmetauscher mit einer Kälteleistung von 3,4 kW wurde das erste Kühlmedium aus dem Zwischenkreislauf, welches noch eine Temperatur von minus 5°C aufwies, auf minus 85 °C abgekühlt. Hierzu wurde das auf minus 130°C abgekühlte Reingas nach Verlassen des ersten Wärmetauschers dem dritten Wärmetauscher als ein Kälteträger zugeführt. Das Reingas wurde dabei bis auf eine Temperatur von minus 10°C erhitzt und danach abgeführt. In einem zweiten Wärmetauscher wurde das erste Kühlmedium aus dem Zwischenkreislauf nach Verlassen des dritten Wärmetauschsers mit flüssigem Stickstoff als zweites Kühlmedium wieder auf die Temperatur von minus 160 °C gekühlt. Der zweite Wärmetauscher hatte eine Kälteleistung von 3,3 kW. Der flüssige Stickstoff, der vor Eintritt in den zweiten Wärmetauscher eine Temperatur von minus 190°C aufwies, wurde auf eine Temperatur von minus 90°C erhitzt. Der Verbrauch an flüssigem Stickstoff betrug hier nur 39 kg pro Stunde.

Zum Vergleich wurde das Verfahren ohne den im Zwischenkreislauf integrierten dritten Wärmetauscher durchgeführt. Daß bedeutet hier wurde die Kälte des Reingases nicht zur Kühlung des im Kreislauf geführten zweiten Kühlmittels verwendet, sondern das kalte Reingas mit einer Temperatur von minus 130 °C wurde direkt abgeführt. Um das in Kreislauf geführte erste Kühlmedium mit einer Temperatur von minus 5 °C auf minus 160 °C abzukühlen, mußte hier der zweite Wärmetauscher die gesamte Kälteleistung von 6,7 kW erbringen. Der flüssige Stickstoff wurde dabei von einer Temperatur von minus 190 °C bis auf eine Temperatur von minus 10 °C erhitzt und es wurden 63 kg pro Stunde an flüssigem Stickstoff verbraucht.
Fig. 1 zeigt eine Vorrichtung zur Durchführung des Verfahrens mit einem ersten, zweiten und dritten Wärmetauscher.
Fig. 2 zeigt eine Vorrichtung zur Durchführung des Verfahrens mit einem ersten, zweiten, dritten und vierten Wärmetauscher.
Fig. 3 zeigt eine Vorrichtung zur Durchführung des Verfahrens mit einem ersten, zweiten, dritten, vierten und fünften Wärmetauscher.

Fig. 1 zeigt einen ersten Wärmetauscher(1) mit einer Eintrittsleitung (2) für Rohgas, das mit Schadstoffen beladen ist und einer Austrittsleitung (3) für das gereinigte Gas und einem Kondensatablaß (4). Dem ersten Wärmetauscher (1) wird über eine Eintrittsleitung (5) das erste Kühlmedium zugeführt und über eine Austrittsleitung (6) wird das aufgeheizte erste Kühlmedium wieder abgeführt. Es wird zu einem Gebläse oder einer Pumpe (7) geleitet, die über eine Eintrittsleitung (8) mit einem dritten Wärmetauscher (9) verbunden ist. In den dritten Wärmetauscher (9) wird das gekühlte Reingas über eine Eintrittsleitung (10) geleitet, um dessen Kälteinhalt zumindest teilweise an das erste Kühlmedium abzugeben und danach über eine Austrittsleitung (11) der Umgebung zugeführt zu werden. Der dritte Wärmetauscher weist eine Austrittsleitung (12) auf, durch die er mit einem zweiten Wärmetauscher (13) verbunden ist. Über eine Ausgangsleitung (14) wird das erste Kühlmedium dem ersten Wärmetauscher (1) über dessen Eintrittsleitung (5) wieder zugeführt. Dem zweiten Wärmetauscher (13) ist eine Eintrittsleitung (15) und eine Austrittsleitung (16) für ein zweites Kühlmedium zugeordnet. Das zweite Kühlmedium wird aus einem Vorratsbehälter (17) oder über eine hier nicht dargestellte Rohrleitung zugeführt.

Bei der in Fig. 2 dargestellten Vorrichtung ist gegenüber der Vorrichtung der Fig. 1 zusätzlich ein vierter Wärmetauscher (18) in den Kreislauf des ersten Kühlmediums nach dem Gebläse oder der Pumpe (7) und vor dem dritten Wärmetauscher (9) geschaltet. Dem vierten Wärmetauscher ist eine Eintrittsleitung (19) für das von dem Gebläse oder der Pumpe (7) kommende erste Kühlmedium zugeordnet und er ist über eine Ausstrittsleitung (20) mit dem dritten Wärmetauscher verbunden. Über eine Eintrittsleitung (21) wird das aus dem zweiten Wärmetauscher kommende, zweite Kühlmedium zugeführt und es wird über eine Austrittsleitung (22) an die Umgebung abgeführt oder einer weiteren Verwendung zugeführt.

In der Vorrichtung der Fig. 3 ist gegenüber der in Fig. 1 gezeigten Vorrichtung ein fünfter Wärmetauscher (23) angeordnet, der über eine Eintrittsleitung (24) mit dem zweiten Wärmetauscher (12) verbunden ist. Dem fünften Wärmetauscher (23) ist eine Austrittsleitung (25) für das zweite Kühlmedium zugeordnet. Das Rohgas wird über eine Eintrittsleitung (26) dem fünften Wärmetauscher (23) zugeführt und über eine Austrittsleitung (27) in den ersten Wärmetauscher (1) geleitet.

## Patentansprüche

1. Verfahren zur Reinigung von Gasen,
bei dem das Rohgas durch Kondensieren und/oder Ausfrieren der Schadstoffe gereinigt wird mit Hilfe eines ersten Kühlmediums in mindestens einem ersten Wärmetauscher (1), bei dem das erwärmte erste Kühlmedium nach Verlassen des ersten Wärmetauschers (1) mindestens einem zweiten Wärmetauscher (13) zugeführt wird und anschließend im Kreislauf zumindest zeitweise dem ersten Wärmetauscher (1) wieder zugeführt wird und wobei der zweite Wärmetauscher (13) mit einem zweiten Kühlmedium gekühlt wird,
wobei das erste Kühlmedium vor dessen Zuführung in den ersten (1) oder zweiten (13) Wärmetauscher in mindestens einem dritten Wärmetauscher (9) zumindest zeitweise mit Hilfe des kalten Reingases gekühlt wird,
**dadurch gekennzeichnet,**
**dass** die Übertragung von Wärme vom Rohgas auf das erste Kühlmedium durch verschiedene Strömungswege an den gemeinsamen Wärmetauscherflächen des ersten Wärmetauschers (1) realisiert wird.

2. Verfahren nach Anspruch 1,
**dadurch gekennzeichnet, daß** das erste Kühlmedium vor dessen Zuführung in den ersten (1), zweiten (13) oder dritten (9) Wärmetauscher zumindest zeitweise zusätzlich gekühlt wird mit Hilfe des zweiten Kühlmediums, das aus dem zweiten Wärmetauscher (13) austritt.

3. Verfahren nach einem der Ansprüche 1 oder 2,
**dadurch gekennzeichnet, daß** das erste Kühlmedium vor dessen Zuführung in den ersten (1), zweiten (13) oder dritten (9) Wärmetauscher zumindest zeitweise zusätzlich gekühlt wird in einem vierten Wärmetauscher (18) mit Hilfe des zweiten Kühlmediums, das aus dem zweiten Wärmetauscher (13) austritt.

4. Verfahren nach einem der vorhergehenden Ansprüche,
**dadurch gekennzeichnet, daß** das erste Kühlmedium gasförmiger Stickstoff ist.

5. Verfahren nach einem der vorhergehenden Ansprüche,
**dadurch gekennzeichnet, daß** das zweite Kühlmedium flüssiger Stickstoff ist.

6. Verfahren nach einem der vorhergehenden Ansprüche,
**dadurch gekennzeichnet, daß** das erste Kühlmedium vor dessen Zuführung in den ersten (1), zweiten (13) und/oder dritten (9) Wärmetauscher zumindest zeitweise zusätzlich mit Hilfe von Kühlwasser, Kühlsole oder Kältemaschinen gekühlt wird.

7. Verfahren nach einem der vorhergehenden Ansprüche,
**dadurch gekennzeichnet, daß** das den zweiten Wärmetauscher (13) verlassende zweite Kühlmedium einem fünften Wärmetauscher (23) zugeführt wird, mit welchem das Rohgas vorgekühlt wird.

8. Verfahren nach einem der vorhergehenden Ansprüche,
**dadurch gekennzeichnet, daß** der erste (1), zweite (13), dritte (9), vierte (18) und/oder fünfte (23) Wärmetauscher im Gegenstromverfahren betrieben wird.

9. Vorrichtung zur Reinigung von Gasen mit mindestens einem ersten Wärmetauscher (1), dem mindestens eine Eintrittsleitung (2) für das Rohgas und mindestens eine Austrittsleitung (3) für das kalte Reingas und mindestens einer Eintrittsleitung (5) und mindestens einer Austrittsleitung (6) für ein erstes Kühlmedium sowie Wärmetauscherflächen zur Übertragung von Wärme vom Rohgas auf das erste Kühlmedium zugeordnet sind, mit mindestens einem zweiten Wärmetauscher (13), dem mindestens eine mit der Austrittsleitung (6) des ersten Wärmetauschers (1) strömungsverbundene Eintrittsleitung (12) und mindestens eine mit der Eintrittsleitung (5) des ersten Wärmetauschers (1) strömungsverbundene Austrittsleitung (14) für das erste Kühlmedium und mindestens einer Eintrittsleitung (15) und mindestens eine Austrittsleitung (16) für ein zweites Kühlmedium zugeordnet sind, wobei in der Leitung für das erste Kühlmedium mindestens ein dritter Wärmetauscher (9) mit mindestens einer Eintrittsleitung (8) und mindestens einer Austrittsleitung für das erste Kühlmedium angeordnet ist und dem dritten Wärmetauscher (9) mindestens eine Eintrittsleitung (10) und mindestens eine Austrittsleitung (11) für das aus dem ersten Wärmetauscher (1) kommende kalte Reingas zugeordnet sind.

10. Vorrichtung nach Anspruch 9,
**dadurch gekennzeichnet, daß** in der Leitung für das erste Kühlmedium mindestens ein vierter Wärmetauscher (18) mit mindestens einer Eintrittsleitung (19) und mindestens einer Austrittsleitung (20) für das erste Kühlmedium angeordnet ist und dem vierten Wärmetauscher (18) mindestens eine Eintrittsleitung (21) und mindestens eine Austrittsleitung (22) für das aus dem zweiten (13) und/oder dritten (9) Wärmetauscher kommende zweite Kühlmedium zugeordnet sind.

11. Vorrichtung nach einem der Ansprüche 9 oder 10,
**dadurch gekennzeichnet, daß** der zweite (13), dritte (9) und/oder vierte (18) Wärmetauscher in einen einzigen Apparat integriert sind und der Wärmetausch durch verschiedene Strömungswege an den gemeinsamen Wärmetauschflächen realisiert wird.

12. Vorrichtung nach einem der Ansprüche 9 bis 11,
**dadurch gekennzeichnet, dass** in der Leitung für das zu reinigende Gas mindestens ein fünfter Wärmetauscher (23) mit mindestens einer Eintrittsleitung (25) und mindestens einer Austrittsleitung (26) für zu reinigende Gas angeordnet ist und dem fünften Wärmetauscher (23) mindestens eine Eintrittsleitung (24) und mindestens eine Austrittsleitung (25) für das aus dem zweiten (13), dritten (9) und/oder vierten (18) Wärmetauscher kommende zweite Kühlmedium zugeordnet sind.

## Claims

1. Process for purifying gases, in which the crude gas is purified by condensing and/or freezing out the pollutants with the aid of a first cooling medium in at least one first heat exchanger (1), in which the heated first cooling medium, after it has left the first heat exchanger (1), is fed to at least one second heat exchanger (13) and is then at least from time to time circulated back to the first heat exchanger (1), the second heat exchanger (13) being cooled using a second cooling medium, the first cooling medium, before it is fed into the first heat exchanger (1) or second heat exchanger (13), being cooled at least from time to time in at least one third heat exchanger (9) with the aid of the cold pure gas, **characterized in that** the transfer of heat from the crude gas to the first cooling medium is realized by different flow paths at the common heat exchanger surfaces of the first heat exchanger (1).

2. Process according to Claim 1, **characterized in that** the first cooling medium, before it is fed into the first heat exchanger (1), second heat exchanger (13) or third heat exchanger (9), is at least from time to time additionally cooled with the aid of the second cooling medium, which emerges from the second heat exchanger (13).

3. Process according to one of Claims 1 or 2, **characterized in that** the first cooling medium, before it is fed into the first heat exchanger (1), second heat exchanger (13) or third heat exchanger (9), is additionally cooled, at least from time to time, in a fourth heat exchanger (18) with the aid of the second cooling medium, which emerges from the second heat exchanger (13).

4. Process according to one of the preceding claims, **characterized in that** the first cooling medium is gaseous nitrogen.

5. Process according to one of the preceding claims, **characterized in that** the second cooling medium is liquid nitrogen.

6. Process according to one of the preceding claims, **characterized in that** the first cooling medium, before it is fed into the first heat exchanger (1), second heat exchanger (13) and/or third heat exchanger (9), is additionally cooled, at least from time to time, with the aid of cooling water, cooling brine or refrigeration machines.

7. Process according to one of the preceding claims, **characterized in that** the second cooling medium, which leaves the second heat exchanger (13), is fed to a fifth heat exchanger (23), by means of which the crude gas is precooled.

8. Process according to one of the preceding claims, **characterized in that** the first heat exchanger (1), second heat exchanger (13), third heat exchanger (9), fourth heat exchanger (18) and/or fifth heat exchanger (23) is operated in countercurrent mode.

9. Apparatus for purifying gases, having at least one first heat exchanger (1), which is assigned at least one inlet line (2) for the crude gas and at least one outlet line (3) for the cold pure gas and at least one inlet line (5) and at least one outlet line (6) for a first cooling medium, as well as heat exchanger surfaces for the transfer of heat from the crude gas to the first cooling medium, having at least one second heat exchanger (13), which is assigned at least one inlet line (12), which is in flow communication with the outlet line (6) of the first heat exchanger (1), and at least one outlet line (14), which is in flow communication with the inlet line (5) of the first heat exchanger (1), for the first cooling medium and at least one inlet line (15) and at least one outlet line (16) for a second cooling medium, at least one third heat exchanger (9), having at least one inlet line (8) and at least one outlet line for the first cooling medium, being arranged in the line for the first cooling medium, and the third heat exchanger (9) being assigned at least one inlet line (10) and at least one outlet line (11) for the cold pure gas coming out of the first heat exchanger (1).

10. Apparatus according to Claim 9, **characterized in that** at least one fourth heat exchanger (18), having at least one inlet line (19) and at least one outlet line (20) for the first cooling medium, is arranged in the line for the first cooling medium, and the fourth heat exchanger (18) is assigned at least one inlet line (21) and at least one outlet line (22) for the second cooling medium coming out of the second heat exchanger (13) and/or third heat exchanger (9).

11. Apparatus according to one of Claims 9 or 10, **characterized in that** the second heat exchanger (13), third heat exchanger (9) and/or fourth heat exchanger (18) are integrated in a single piece of apparatus, and the heat exchange is realized by different flow paths at the common heat exchange surfaces.

12. Apparatus according to one of claims 9 to 11, **characterized in that** at least one fifth heat exchanger (23), having at least one inlet line (25) and at least one outlet line (26) for gas which is to be purified, is arranged in the line for the gas which is to be purified, and the fifth heat exchanger (23) is assigned at least one inlet line (24) and at least one outlet line (25) for the second cooling medium coming out of the second heat exchanger (13), third heat exchanger (9) and/or fourth heat exchanger (18).

## Revendications

1. Procédé de purification de gaz, dans lequel le gaz brut est purifié par condensation et/ou séparation par congélation des polluants à l'aide d'un premier moyen de refroidissement dans au moins un premier échangeur de chaleur (1), dans lequel le premier moyen de refroidissement chauffé, après avoir quitté le premier échangeur de chaleur (1), est acheminé vers au moins un deuxième échangeur de chaleur (13) puis est à nouveau acheminé dans le circuit au moins par intermittence vers le premier échangeur de chaleur (1) et où le deuxième échangeur de chaleur (13) est refroidi à l'aide d'un deuxième moyen de refroidissement, où le premier moyen de refroidissement, avant sont acheminement vers le premier (1) ou le deuxième (13) échangeur de chaleur est refroidi au moins par intermittence dans au moins un troisième échangeur de chaleur (9) à l'aide d'un gaz épuré froid,
**caractérisé en ce que**
la transmission de chaleur à partir du gaz brut vers le premier moyen de refroidissement est réalisée par le biais de différents parcours de flux au niveau des surfaces d'échange thermique communes du premier échangeur de chaleur (1).

2. Procédé selon la revendication 1,
**caractérisé en ce que**
le premier moyen de refroidissement est également refroidi au moins par intermittence avant son acheminement vers le premier (1), le deuxième (13) ou le troisième (9) échangeur de chaleur à l'aide du deuxième moyen de refroidissement, qui provient du deuxième échangeur de chaleur (13).

3. Procédé selon l'une des revendication 1 ou 2,
**caractérisé en ce que**
le premier moyen de refroidissement est en plus refroidi au moins par intermittence avant son acheminement dans le premier (1), le deuxième (13) ou le troisième (9) échangeur de chaleur dans un quatrième échangeur de chaleur (18) à l'aide du deuxième moyen de refroidissement, qui provient du deuxième échangeur de chaleur (13).

4. Procédé selon l'une des revendications précédentes,
**caractérisé en ce que**
le premier moyen de refroidissement est de l'azote gazeux.

5. Procédé selon l'une des revendications précédentes,
**caractérisé en ce que**
le deuxième moyen de refroidissement est de l'azote liquide.

6. Procédé selon l'une des revendications précédentes,
**caractérisé en ce que**
le premier moyen de refroidissement est refroidi au moins par intermittence avant son acheminement vers le premier (1), le deuxième (13) et/ou le troisième (9) échangeur de chaleur à l'aide d'eau réfrigérante, de saumure réfrigérante ou de machines réfrigérantes.

7. Procédé selon l'une des revendications précédentes,
**caractérisé en ce que**
le deuxième moyen de refroidissement qui quitte le deuxième échangeur de chaleur (13) est acheminé vers un cinquième échangeur de chaleur (23), avec lequel le gaz brut est préalablement refroidi.

8. Procédé selon l'une des revendications précédentes,
**caractérisé en ce que**
le premier (1), le deuxième (13), le troisième (9), le quatrième (18) et/ ou le cinquième (23) échangeur de chaleur fonctionnent dans un procédé à contre-courant.

9. Dispositif de purification de gaz comportant au moins un premier échangeur de chaleur (1), auquel sont associées au moins une conduite d'entrée (2) pour le gaz brut et au moins une conduite de sortie (3) pour le gaz froid épuré et au moins une conduite d'entrée (5) et au moins une conduite de sortie (6) pour un premier moyen de refroidissement ainsi que des surfaces d'échange thermique pour la transmission de chaleur à partir du gaz brut vers le premier moyen de refroidissement, comportant au moins un deuxième échangeur de chaleur (13), auquel sont associées au moins une conduite d'entrée (12) reliée en direction du flux à la conduite de sortie (6) du premier échangeur de chaleur (1) et au moins une conduite de sortie (14) reliée en direction du flux à la conduite d'entrée (5) du premier échangeur de chaleur (1) pour le premier moyen de refroidissement et au moins une conduite d'entrée (15) et au moins une conduite de sortie (16) pour un deuxième moyen de refroidissement, où, dans la conduite pour le premier moyen de refroidissement est disposé au moins un troisième échangeur de chaleur (9) comportant au moins une conduite d'entrée (8) et au moins une conduite de sortie pour le premier moyen de refroidissement et où, au troisième échangeur de chaleur (9) sont associées au moins une conduite d'entrée (10) et au moins une conduite de sortie (11) pour le gaz épuré froid sortant du premier échangeur de chaleur (1).

10. Dispositif selon la revendication 9,
**caractérisé en ce que**
dans la conduite pour le premier moyen de refroidissement est disposé au moins un quatrième échangeur de chaleur (18) comportant au moins une conduite d'entrée (19) et au moins une conduite de sortie (20) pour le premier moyen de refroidissement et **en ce qu'**au quatrième échangeur de chaleur (18) sont associées au moins une conduite d'entrée (21) et au moins une conduite de sortie (22) pour le deuxième moyen de refroidissement provenant du deuxième (13) et/ ou du troisième (9) échangeur de chaleur.

11. Dispositif selon la revendication 9 ou 10,
**caractérisé en ce que**
le deuxième (13), le troisième (9) et/ ou le quatrième (18) échangeur de chaleur sont intégrés dans un seul appareil et **en ce que** l'échange thermique est réalisé par le biais de différents parcours de flux au niveau de surfaces d'échange thermique communes.

12. Dispositif selon l'une des revendications 9 à 11,
**caractérisé en ce que**
dans la conduite pour le gaz à purifier est disposé au moins un cinquième échangeur de chaleur (23) comportant au moins une conduite d'entrée (25) et au moins une conduite de sortie (26) pour le gaz à purifier et **en ce qu'**au cinquième échangeur de chaleur (23) sont associées au moins une conduite d'entrée (24) et au moins une conduite de sortie (25) pour le deuxième moyen de refroidissement provenant du deuxième (13), du troisième (9) et/ ou du quatrième (18) échangeur de chaleur.
